# EUROPÄISCHE PATENTSCHRIFT

(11) **EP 2 927 163 B1**
(45) Veröffentlichungstag und Bekanntmachung des Hinweises auf die Patenterteilung: **28.02.2018**
(21) Anmeldenummer: 14162940.2
(22) Anmeldetag: 31.03.2014
(51) Int. Cl.: B65G 17/12, B65G 47/57, G01N 35/04, B65G 54/02

(54) **Vertikalfördervorrichtung, Probenverteilungssystem und Laborautomatisierungssystem**
Vertical conveyor, sample distribution system and laboratory automation system
Dispositif de transport vertical, système de distribution d'échantillons et système d'automatisation de laboratoire

(43) Veröffentlichungstag der Anmeldung: 07.10.2015
(73) Patentinhaber: Roche Diagnostics GmbH, 68305 Mannheim (DE); F. Hoffmann-La Roche AG, 4070 Basel (CH)
(72) Erfinder: Schneider, Hans, 71409 Schwaikheim (DE); Riether, Christian, 71397 Leutenbach (DE)
(74) Vertreter: Patentanwälte Ruff, Wilhelm, Beier, Dauster & Partner mbB

(56) Entgegenhaltungen:
- WO-A1-2013/064656
- DE-A1- 3 909 786
- US-A1- 2005 061 622
- US-A1- 2013 034 410

## Beschreibung

### Anwendungsgebiet und Stand der Technik

Die Erfindung betrifft eine Vertikalfördervorrichtung zum Transport von in jeweiligen Probenträgern aufgenommenen Probenbehältern, ein Probenverteilungssystem mit einer solchen Vertikalfördervorrichtung und ein Laborautomatisierungssystem mit einem solchen Probenverteilungssystem.

Probenbehälter sind typischerweise längliche, einseitig offene Gefäße aus meist transparentem Glas oder Kunststoff, die zur Aufbewahrung und zum Transport von meist flüssigen Proben verwendet werden. Bei derartigen Proben handelt es sich beispielsweise um Blutproben.

Probenverteilungssysteme werden beispielsweise in Laborautomatisierungssystemen verwendet, um Proben in Probenbehältern zu einer Mehrzahl von unterschiedlichen Stationen des Laborautomatisierungssystems zu transportieren.

Das Dokument WO 2013/064656 A1 zeigt ein Probenverteilungssystem mit einer Anzahl von Transportvorrichtungen bzw. Probenträgern, die jeweils ein magnetisches Element aufweisen. Die Probenträger sind dazu ausgebildet, einen Probenbehälter, beispielsweise in Form eines Probenröhrchens, aufzunehmen. In den Probenbehältern sind zu analysierende Proben, beispielsweise Blutproben, enthalten. Das Probenverteilungssystem weist weiter eine Transporteinrichtung mit einer Transportfläche auf, die dazu ausgebildet ist, die Probenträger zu tragen. Das Probenverteilungssystem weist weiter eine Anzahl von elektromagnetischen Aktuatoren auf, die stationär unter der Transportfläche angeordnet sind. Die elektromagnetischen Aktuatoren sind dazu ausgebildet, einen jeweiligen Probenträger durch Ausüben einer magnetischen Kraft auf der Transportfläche zu bewegen. Eine Steuerungseinrichtung ist dazu ausgebildet, die elektromagnetischen Aktuatoren derart anzusteuern, dass sich ein jeweiliger Probenträger auf der Transportfläche entlang einer vorgebbaren Bewegungsbahn bewegt. Das Probenverteilungssystem dient zum Transportieren der Probenbehälter zwischen unterschiedlichen Stationen eines Laborautomatisierungssystems, wobei eine Bewegungsbahn typischerweise zwischen den unterschiedlichen Stationen verläuft.

Die US 2005/0061622 A1 zeigt eine Vertikalfördervorrichtung gemäß dem Oberbegriff des Anspruchs 1.

Die US 2013/0034410 A1 zeigt ein Probenverteilungssystem mit elektromagnetischen Aktuatoren für Probenträger, die ein magnetisch wirksames Element aufweisen.

Die DE 39 09 786 A1 zeigt eine Vorrichtung zum Transportieren von Kopsen und Hülsen zwischen im Verlauf des Transportes wechselnden Ebenen.

### Aufgabe und Lösung

Es ist eine Aufgabe der Erfindung, eine Vertikalfördervorrichtung vorzusehen, mit welcher Probenträger zwischen unterschiedlichen Niveaus eines Probenverteilungssystems transportiert werden können. Es ist des Weiteren eine Aufgabe der Erfindung, ein Probenverteilungssystem mit einer solchen Vertikalfördervorrichtung vorzusehen. Außerdem ist es eine Aufgabe der Erfindung, ein Laborautomatisierungssystem mit einem solchem Probenverteilungssystem vorzusehen.

Dies wird erfindungsgemäß durch eine Vertikalfördervorrichtung nach Anspruch 1, ein Probenverteilungssystem nach Anspruch 7 und ein Laborautomatisierungssystem nach Anspruch 8 gelöst. Ausführungsformen können beispielsweise den Unteransprüchen entnommen werden.

Die Erfindung betrifft eine Vertikalfördervorrichtung zum Transport von in Probenträgern aufgenommenen Probenbehältern zwischen einem unteren Niveau und einem oberen Niveau eines Probenverteilungssystems. Probenträger, die nicht Bestandteil der Vertikalfördervorrichtung sind, weisen mindestens ein magnetisch wirksames Element auf, das dazu ausgebildet ist, mit einem mittels mindestens eines elektromagnetischen Aktuators erzeugten Magnetfeld derart wechselzuwirken, dass eine Antriebskraft auf den Probenträger bewirkt wird.

Die Vertikalfördervorrichtung weist auf:
- eine Anzahl von Förderelementen, die jeweils eine Förderfläche aufweisen, die zur Aufnahme oder zum Aufsetzen und Tragen mindestens eines Probenträgers vorgesehen ist,
- eine Umlaufeinrichtung, die dazu ausgebildet ist, im Betrieb die Förderelemente zwischen dem unteren Niveau und dem oberen Niveau umlaufend zu bewegen, wobei die jeweiligen Förderflächen während der umlaufenden Bewegung durchgängig horizontal ausgerichtet sind bzw. bleiben, und
- mindestens einen elektromagnetischen Aktuator, der auch als Förderflächenaktuator bezeichnet werden kann und der dazu ausgebildet ist, einen Probenträger, der sich auf einer der Förderflächen befindet, mit einer Antriebskraft zu beaufschlagen.

Die Vertikalfördervorrichtung ermöglicht einen Transport von Probenträgern mit darin aufgenommenen Probenbehältern zwischen unterschiedlichen Niveaus eines Probenverteilungssystems mit geringem Platzbedarf. Der Transport erfolgt vertikal, so dass während des Transports keine horizontale Distanz zu überwinden ist. Dies ermöglicht einen besonders kompakten Aufbau der Vertikalfördervorrichtung und eines sie enthaltenden Probenverteilungssystems.

Probenträger sind typischerweise (nicht notwendigerweise) rund ausgebildet und mit einem magnetisch wirksamen Element in Form eines Permanentmagneten versehen. Sie weisen typischerweise an ihrer Oberseite eine Haltevorrichtung auf, um ein Probenröhrchen aufzunehmen, die beispielsweise ähnlich einem Reagenzglas oder als Reagenzglas ausgebildet sein können. Probenträger können beispielsweise zum Transportieren des Probenbehälters zwischen präanalytischen, analytischen und/oder postanalytischen Stationen eines Laborautomatisierungssystems verwendet werden. Eine präanalytische Station dient üblicherweise der Vorbereitung von Proben bzw. Probenbehältern. Eine analytische Station kann beispielsweise dazu ausgebildet sein, eine Probe oder einen Teil der Probe und eine Reagenz zu verwenden, um ein messbares Signal zu erzeugen, auf Basis dessen bestimmbar ist, ob und gegebenenfalls in welcher Konzentration der Analyt vorhanden ist. Eine postanalytische Station dient üblicherweise der Nachverarbeitung von Proben bzw. Probenbehältern.

Die Förderelemente der Vertikalfördervorrichtung ermöglichen aufgrund ihrer kontinuierlich horizontalen Ausrichtung, dass ein Probenträger auf die Förderfläche verbracht und dort transportiert werden kann, ohne herunterzufallen bzw. von der Förderfläche zu kippen. Es sei verstanden, dass grundsätzlich auch mehrere Probenträger auf eine einzelne Förderfläche verbracht werden können.

Die Förderelemente mit ihren jeweiligen Förderflächen können in der Art eines Paternosters ausgeführt sein.

Der elektromagnetische (Förderflächen-) Aktuator, bevorzugt ein Elektromagnet, ist gemäß einer Ausführung derart ausgeführt, dass er mit der zugehörigen Förderfläche, unter der er angeordnet ist, umläuft. Typischerweise wird in einer solchen Ausführung unter jeder Förderfläche ein zugehöriger elektromagnetischer (Förderflächen-) Aktuator angeordnet. Alternativ kann auch ein einzelner ortsfester elektromagnetischer (Förderflächen-) Aktuator verwendet werden, der beispielsweise schwenkbar ausgeführt sein kann und dann unter eine Förderfläche geschwenkt wird, wenn die Förderfläche beladen und/oder entladen werden soll.

Es sei verstanden, dass zum Verbringen von Probenträgern auf die Transportfläche anstelle von elektromagnetischen (Förderflächen-) Aktuatoren auch andere Mechanismen verwendet werden können. Insbesondere kann beispielsweise ein Greifer, ein Schleppriemen oder eine andere Konstruktion verwendet werden. Derartige Abwandlungen der beschriebenen Ausführung stellen eigenständige Erfindungsgedanken dar, wobei die weiter oben und unten beschriebenen Abwandlungen auf diese entsprechend angewendet werden können, soweit sie mit der entsprechenden Ausführung kompatibel sind.

Bei einem elektromagnetischen (Förderflächen-) Aktuator kann es sich insbesondere um einen Elektromagneten, bevorzugt um einen spulenförmigen Elektromagneten mit einem Kern, handeln.

Mittels eines elektromagnetischen (Förderflächen-) Aktuators kann ein Probenträger auf die Förderfläche verbracht werden, auf dieser gehalten werden und/oder von dieser entfernt werden. Dies ermöglicht eine besonders einfache Handhabung des Probenträgers, wobei auf komplizierte Vorrichtungen wie beispielsweise Greifer oder Ähnliches verzichtet werden kann.

Die Umlaufeinrichtung kann im Betrieb die Förderelemente entlang eines von allen Förderelementen beschriebenen Umlaufwegs bewegen. Dies entspricht prinzipiell der Ausführung eines Paternosters. Damit kann ein nahezu kontinuierlicher Transport zwischen unterschiedlichen Niveaus erreicht werden.

Die Vertikalfördervorrichtung kann eine Mehrzahl von Förderelementen aufweisen, die entlang des Umlaufwegs in gleichmäßigen Abständen zueinander angeordnet sind. Damit kann die Handhabung der Vertikalfördervorrichtung vereinfacht werden. Es kann beispielsweise davon ausgegangen werden, dass nach einem definierten Betrieb der Vertikalfördervorrichtung, beispielsweise für einen bestimmten Zeitraum, ein Transportvorgang abgeschlossen ist. Entsprechend steht wieder eine Förderfläche für einen Transportvorgang zur Verfügung. Ein Abstand zwischen benachbarten Förderelementen sollte mindestens so groß sein, dass ein Probenträger mit aufgenommenem Behälter zwischen zwei Förderflächen bewegbar ist. Es kann vorteilhaft sein, wenn gewisse Förderflächen zu gewissen Förderflächen eine bestimmte Proportion aufweisen, um eben gleichzeitig oben und unten aufladen zu können.

Der Umlaufweg kann einen ersten vertikalen Abschnitt und einen dazu parallelen zweiten vertikalen Abschnitt aufweisen, die jeweils zwischen dem unteren Niveau und dem oberen Niveau verlaufen. Die Umlaufeinrichtung bewegt im Betrieb die Förderelemente entlang des ersten vertikalen Abschnitts von dem unteren Niveau zu dem oberen Niveau und bewegt ferner die Förderelemente entlang des zweiten vertikalen Abschnitts von dem oberen Niveau zu dem unteren Niveau. Damit ist festgelegt, an welchen Stellen ein Transport von oben nach unten und an welchen Stellen ein Transport von unten nach oben erfolgt.

Die Umlaufeinrichtung kann ein erstes oberes Rad, ein erstes unteres Rad und ein erstes Band aufweisen, wobei das erste Band um das erste obere Rad und das erste untere Rad jeweils halbkreisförmig umläuft und zwischen dem ersten oberen Rad und dem ersten unteren Rad gespannt ist, wobei zumindest das erste obere Rad oder das erste untere Rad im Betrieb der Umlaufeinrichtung angetrieben wird, und wobei die Förderelemente an dem ersten Band befestigt sind. Die Umlaufeinrichtung kann ein zweites oberes Rad, ein zweites unteres Rad und ein zweites Band aufweisen, wobei das zweite Band um das zweite obere Rad und das zweite untere Rad jeweils halbkreisförmig umläuft und zwischen dem zweiten oberen Rad und dem zweiten unteren Rad gespannt ist, wobei zumindest das zweite obere Rad oder das zweite untere Rad im Betrieb der Umlaufeinrichtung synchron mit dem ersten oberen Rad oder dem ersten unteren Rad angetrieben ist, und wobei die Förderelemente an dem ersten Band und an dem zweiten Band befestigt sind. Dies ermöglicht eine einfache Realisierung der bereits beschriebenen Ausführung mit einem Umlauf der Förderelemente entlang jeweiliger vertikaler Abschnitte.

Ein jeweiliges Förderelement kann eine Erkennungsvorrichtung für einen auf der Förderfläche des Förderelements befindlichen Probenträger aufweisen. Damit kann im Betrieb der Vertikalfördervorrichtung erkannt werden, ob sich ein Probenträger auf der jeweiligen Förderfläche befindet und somit kann die Zuverlässigkeit im Betrieb erhöht werden. Eine solche Erkennungsvorrichtung kann als Hall-Sensor ausgebildet sein.

Die Erfindung betrifft des Weiteren ein Probenverteilungssystem, aufweisend:
- eine Anzahl von Probenträgern zur Aufnahme eines oder mehrerer Probenbehälter, wobei ein jeweiliger Probenträger mindestens ein magnetisch wirksames Element aufweist, das dazu ausgebildet ist, mit einem mittels mindestens eines elektromagnetischen Aktuators erzeugten Magnetfeld derart wechselzuwirken, dass eine Antriebskraft auf den Probenträger bewirkt wird,
- eine untere Transportfläche und eine dazu vertikal höher angeordnete obere Transportfläche, die jeweils dazu ausgebildet sind, Probenträger zu tragen,
- eine Anzahl von ersten elektromagnetischen Aktuatoren, die auch als Transportflächenaktuatoren bezeichnet werden können und die stationär unter der unteren Transportfläche angeordnet sind, wobei die ersten elektromagnetischen (Transportflächen-) Aktuatoren dazu ausgebildet sind, einen Probenträger, der auf der unteren Transportfläche angeordnet ist, durch Ausüben einer magnetischen Kraft auf den Probenträger zu bewegen, und
- eine Anzahl von zweiten elektromagnetischen Aktuatoren, die auch als Transportflächenaktuatoren bezeichnet werden können und die stationär unter der oberen Transportfläche angeordnet sind, wobei die zweiten elektromagnetischen (Transportflächen-) Aktuatoren dazu ausgebildet sind, einen Probenträger, der auf der oberen Transportfläche angeordnet ist, durch Ausüben einer magnetischen Kraft auf den Probenträger zu bewegen,
- eine oben beschriebene Vertikalfördervorrichtung, wobei die untere Transportfläche dem unteren Niveau entspricht und die obere Transportfläche dem oberen Niveau entspricht, sowie
- eine Steuerungseinrichtung, die dazu ausgebildet ist,
   - die unter den Transportflächen angeordneten elektromagnetischen (Transportflächen-) Aktuatoren derart anzusteuern, dass sich ein Probenträger auf den Transportflächen entlang einer zugehörigen vorgebbaren Bewegungsbahn bewegt,
   - den mindestens einen elektromagnetischen (Förderflächen-) Aktuator und/oder die unter den Transportflächen angeordneten elektromagnetischen (Förderflächen-) Aktuatoren derart anzusteuern, dass ein Probenträger von der Transportfläche in Richtung einer der Förderflächen oder von einer der Förderflächen in Richtung einer der Transportflächen bewegt wird, und
   - das Umlaufsystem so zu steuern, dass die Probenträger zwischen dem unteren Niveau und dem oberen Niveau transportiert werden.

Die Probenträger können rund ausgeführt sein, was eine zu beachtende Vorzugsorientierung vermeidet. Bei einem magnetisch wirksamen Element in einem Probenträger kann es sich um einen Permanentmagneten oder ein anderes magnetisches Material handeln.

Die obere Transportfläche ist in vertikaler Richtung höher angeordnet als die untere Transportfläche. Dies kann beispielsweise dazu dienen, Analysegeräte oder andere Einrichtungen operativ mit dem Probenverteilungssystem zu koppeln, deren Ein- und/oder Auslass sich auf unterschiedlichen Höhen befindet. Zudem ist es möglich, unterschiedliche Niveaus zu verwenden, um unterschiedliche Transportaufgaben auszuführen. Beispielsweise kann ein unteres Niveau zum Transport von Probenträgern über längere Strecken verwendet werden, wohingegen ein oberes Niveau zum Verbringen der Probenträger an Analysegeräte oder andere Stationen verwendet wird. Es sei verstanden, dass beispielsweise auch der umgekehrte Fall möglich ist.

Bei den elektromagnetischen Aktuatoren kann es sich um Elektromagnete handeln, beispielsweise in Form von Spulen. Diese können einen Kern aufweisen, der die magnetische Wirkung verstärkt. Durch Wechselwirkung zwischen einem durch die elektromagnetischen Aktuatoren erzeugten Magnetfeld und dem magnetisch wirksamen Element in dem Probenträger kann ein Probenträger über die Transportfläche bewegt werden. Hierzu können die elektromagnetischen Aktuatoren in geeigneter Weise angesteuert werden. Die elektromagnetischen Aktuatoren können matrixartig verteilt sein, so dass eine zweidimensionale Bewegung über die Transportfläche bewirkt werden kann.

Mittels der Vertikalfördervorrichtung können Probenträger mit darin aufgenommenen Probenbehältern zwischen dem unteren Niveau und dem oberen Niveau transportiert werden. Es sei verstanden, dass ein Probenverteilungssystem auch mehr als zwei Niveaus, beispielsweise drei oder vier Niveaus, aufweisen kann. Damit kann die Flexibilität weiter erhöht werden. Die erfindungsgemäße Vertikalfördervorrichtung ist an derartige Ausführungen problemlos anpassbar.

Die Steuerungseinrichtung kann beispielsweise als Computer, als Mikrocomputer, als Mikroprozessor, als speicherprogrammierbare Steuerung (SPS), als anwendungsspezifischer integrierter Schaltkreis (ASIC) oder in anderer Weise ausgeführt werden. Beispielsweise kann sie Prozessormittel und Speichermittel aufweisen, wobei in den Speichermitteln Code gespeichert ist, bei dessen Ausführung sich die Prozessormittel in definierter Weise verhalten. Bei einem Probenträger, der von der Transportfläche in Richtung der Förderfläche bewegt wird, handelt es sich typischerweise um einen zu befördernden Probenträger. Dieser soll also mittels der Vertikalfördervorrichtung auf ein anderes Niveau verbracht werden. Bei einem Probenträger, welcher in bezeichneter Weise von der Förderfläche in Richtung der Transportfläche bewegt wird, handelt es sich typischerweise um einen beförderten Probenträger, welcher also von einem anderen Niveau durch die Vertikalfördervorrichtung auf das aktuelle Niveau transportiert wurde und nun auf die Transportfläche des entsprechenden Niveaus bewegt werden soll.

Die Steuerungseinrichtung kann dazu ausgebildet sein, einen Transport eines Probenträgers von der unteren Transportfläche zu der oberen Transportfläche zu bewirken, indem sie
- die Umlaufeinrichtung der Vertikalfördervorrichtung so lange betreibt, bis sich eines der Förderelemente in einer Position befindet, in der die Förderfläche dieses Förderelements eine ebene Erweiterung der unteren Transportfläche bildet,
- den Probenträger mittels der ersten elektromagnetischen (Transportflächen-) Aktuatoren zu dem Förderelement bewegt,
- den Probenträger mittels (oder unter Mitwirkung) des oder der (Förderflächen-) Aktuatoren auf die Förderfläche des Förderelements bewegt,
- die Umlaufeinrichtung der Vertikalfördervorrichtung so lange betreibt, bis sich das Förderelement in einer Position befindet, in welcher die Förderfläche eine ebene Erweiterung der oberen Transportfläche bildet, und
- den Probenträger mittels (oder unter Mitwirkung) des oder der (Förderflächen-) Aktuatoren von der Förderfläche auf die obere Transportfläche bewegt.

Die Steuerungseinrichtung kann dazu ausbildet sein, einen Transport eines Probenträgers von der oberen Transportfläche zu der unteren Transportfläche zu bewirken, indem sie
- die Umlaufeinrichtung der Vertikalfördervorrichtung so lange betreibt, bis sich eines der Förderelemente in einer Position befindet, in welcher die Förderfläche des Förderelements eine ebene Erweiterung der oberen Transportfläche bildet,
- den Probenträger mittels der zweiten elektromagnetischen (Transportflächen-) Aktuatoren zu dem Förderelement bewegt,
- den Probenträger mittels (oder unter Mitwirkung) des oder der (Förderflächen-) Aktuatoren auf die Förderfläche des Förderelements bewegt,
- die Umlaufeinrichtung der Vertikalfördervorrichtung so lange betreibt, bis sich das Förderelement in einer Position befindet, in welcher die Förderfläche des Förderelements eine ebene Erweiterung der unteren Transportfläche bildet, und
- den Probenträger mittels (oder unter Mitwirkung) des oder der (Förderflächen-) Aktuatoren von der Förderfläche auf die untere Transportfläche bewegt.

Die beschriebenen Ausführungen der Steuerungseinrichtung ermöglichen einen Transport von Probenträgern zwischen dem oberen und dem unteren Niveau. Die Steuerungseinrichtung kann dazu ausgebildet sein, dass sie sowohl einen Probenträger von der unteren Transportfläche auf die obere Transportfläche wie auch einen Probenträger von der oberen Transportfläche auf die untere Transportfläche in eben beschriebener Weise verbringen kann.

Die Steuerungseinrichtung kann dazu ausgebildet sein, den Probenträger auch mittels des (Förderflächen-) Aktuators auf die obere bzw. untere Transportfläche zu bewegen. Dies insbesondere dann, wenn ein Probenträger zu der entsprechenden Transportfläche transportiert wurde und nunmehr auf die Transportfläche bewegt werden soll. Auf diese Weise kann beispielsweise eine abstoßende Kraft auf den Probenträger ausgeübt werden.

Die untere Transportfläche und die obere Transportfläche können in logische Felder unterteilt sein, wobei jedes logische Feld jeweils einem elektromagnetischen Aktuator aus der Anzahl von ersten bzw. zweiten elektromagnetischen Aktuatoren zugeordnet ist. Weiter kann jede Förderfläche der Vertikalfördervorrichtung ein weiteres logisches Feld bilden. Die Steuerungseinrichtung kann ein jeweiliges von einer Förderfläche gebildetes logisches Feld als logisches Feld einer der Transportflächen handhaben, wenn die Förderfläche eine ebene Erweiterung der jeweiligen Transportfläche bildet. Dies ermöglicht eine besonders einfache Ansteuerung der elektromagnetischen Aktuatoren durch die Steuerungseinrichtung. Wenn eine Förderfläche eine ebene Erweiterung der jeweiligen Transportfläche bildet, muss nicht mehr zwischen logischen Feldern der Transportfläche und der Förderfläche unterschieden werden.

Die Vertikalfördervorrichtung kann als optionales Modul einer Einheit ausgebildet sein, die die obere Transportfläche und die untere Transportfläche trägt. Dies ermöglicht eine einfache und zuverlässige Ausführung.

Die Steuerungseinrichtung kann dazu ausgebildet sein, einen bidirektionalen Transport der Probenträger zwischen den Transportflächen mittels der Vertikalfördervorrichtung zu bewirken.

Das Laborautomatisierungssystem weist eine Anzahl (beispielsweise zwischen zwei und zwanzig) von präanalytischen und/oder analytischen und/oder postanalytischen Stationen auf, die dazu ausgebildet sind, Probenbehälter und/oder Proben, die in den Probenbehältern enthalten sind, zu bearbeiten oder zu verarbeiten. Das Bearbeiten bzw. Verarbeiten kann beispielsweise ein Lesen eines Barcodes, ein Entfernen einer Kappe auf dem Röhrchen, ein Zentrifugieren der Probe, ein Aliquotieren der Probe, ein Analysieren der Probe usw. umfassen. Das Laborautomatisierungssystem weist weiter ein oben genanntes Probenverteilungssystem zum Transportieren der Probenbehälter zwischen den präanalytischen, analytischen und postanalytischen Stationen auf.

Die präanalytischen, analytischen und postanalytischen Stationen können beispielsweise mindestens eine Station aus der Menge folgender Stationen aufweisen: eine Kappenentfernungsstation zum Entfernen von Kappen bzw. Verschlüssen auf Probenröhrchen, eine Kappenaufbringstation zum Aufbringen von Kappen bzw. Verschlüssen auf Probenröhrchen, eine Aliquotierstation zum Aliquotieren von Proben, eine Zentrifugierstation zum Zentrifugieren von Proben, eine Archivierstation zum Archivieren von Proben, eine Pipettierstation zum Pipettieren, eine Sortierstation zum Sortieren von Proben bzw. Probenröhrchen, eine Probenröhrchentypbestimmungsstation zum Bestimmen eines Typs eines Probenröhrchens und eine Probenqualitätsbestimmungsstation zum Bestimmen einer Probenqualität.

### Kurze Beschreibung des Ausführungsbeispiels

Die Erfindung wird nachfolgend unter Bezugnahme auf die Zeichnung detailliert beschrieben. Hierbei zeigt schematisch:

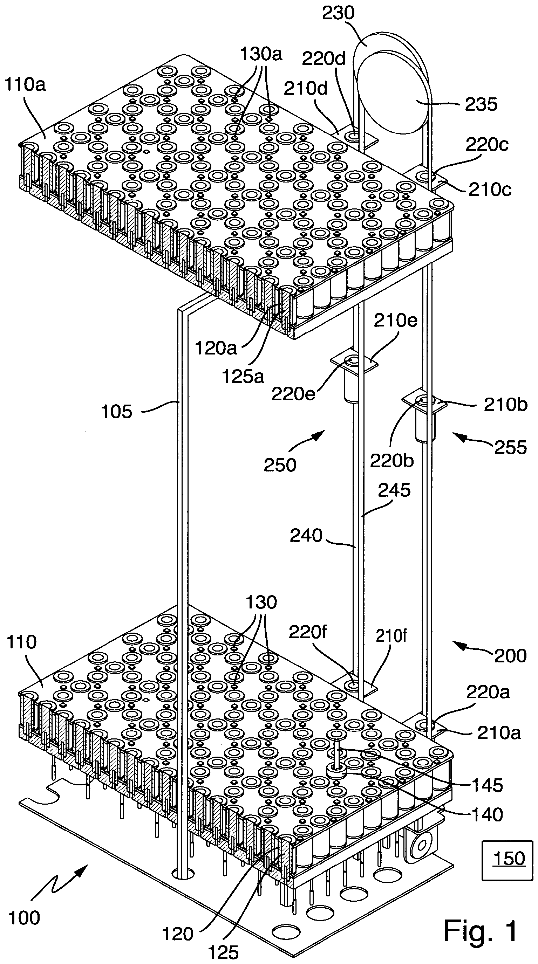

- Fig. 1: ein Probenverteilungssystem mit einer Vertikalfördervorrichtung.

### Detaillierte Beschreibung des Ausführungsbeispiels

Fig. 1 zeigt ein Probenverteilungssystem 100. Dieses weist eine untere Transportfläche 110 und eine obere Transportfläche 110a auf. Die untere Transportfläche 110 entspricht einem unteren Niveau des Probenverteilungssystems 100. Die obere Transportfläche 110a entspricht einem oberen Niveau des Probenverteilungssystems 100.

Unterhalb der unteren Transportfläche 110 ist eine Anzahl von ersten elektromagnetischen (Transportflächen-) Aktuatoren in Form von Spulen 120 mit jeweiligen Kernen 125 angeordnet. Unterhalb der oberen Transportfläche 110a ist entsprechend eine Anzahl von zweiten elektromagnetischen (Transportflächen-) Aktuatoren in Form von Spulen 120a mit jeweiligen Kernen 125a angeordnet. Auf der unteren Transportfläche 110 befindet sich vorliegend ein Probenträger 140 mit einem darin aufgenommenen Probenbehälter in Form eines Probenröhrchens 145. Der Probenträger 140 weist ein magnetisch wirksames Element in Form eines Permanentmagneten auf, so dass durch geeignete Ansteuerung der Elektromagnete 120, 120a eine Kraft auf den Probenträger 140 ausgeübt werden kann und dieser somit über die untere Transportfläche 110 oder die obere Transportfläche 110a bewegt werden kann.

Die obere Transportfläche wird mittels einer Anzahl von Stützen 105 oberhalb der unteren Transportfläche 110 gehalten, wobei vorliegend exemplarisch lediglich eine einzelne Stütze 105 gezeigt ist.

Das Probenverteilungssystem 100 weist ferner eine Vertikalfördervorrichtung 200 auf, die dazu dient, Probenträger 140 mit darin aufgenommenen Probenröhrchen 145 bidirektional zwischen der unteren Transportfläche 110 und der oberen Transportfläche 110a zu transportieren.

Das Probenverteilungssystem 100 weist ferner eine Steuerungseinrichtung 150 auf, die dazu ausgebildet ist, die Elektromagnete 120, 120a und die Vertikalfördervorrichtung 200 zu steuern. Die Steuerungseinrichtung 150 ist dazu in der Lage, durch geeignetes Ansteuern der Magnete 120, 120a einen Probenträger 140 über die untere Transportfläche 110 oder die obere Transportfläche 110a zu bewegen.

Die Vertikalfördervorrichtung 200 weist insgesamt sechs Förderflächen 210a, 210b, 210c, 210d, 210e, 210f auf. Unterhalb einer jeweiligen Förderfläche 210a, 210b, 210c, 210d, 210e, 210f ist jeweils ein elektromagnetischer (Förderflächen-) Aktuator in Form eines Elektromagneten 220a, 220b, 220c, 220d, 220e, 220f angeordnet. Mittels dieser Elektromagnete 220a, 220b, 220c, 220d, 220e, 220f kann der Probenträger 140 auf die jeweilige Förderfläche 210a, 210b, 210c, 210d, 210e, 210f bewegt bzw. gezogen werden, auf dieser gehalten werden und von der Förderfläche 210a, 210b, 210c, 210d, 210e, 210f auf eine der Transportflächen 110, 110a bewegt bzw. gestoßen werden. Die Elektromagnete 220a, 220b, 220c, 220d, 220e, 220f sind ebenfalls durch die Steuerungseinrichtung 150 ansteuerbar. Außerdem kann durch eine Induktionsmessung mittels der Elektromagnete 220a, 220b, 220c, 220d, 220e, 220f erkannt werden, ob sich ein Probenträger 140 auf der jeweiligen Förderfläche 210a, 210b, 210c, 210d, 210e, 210f befindet.

Eine jeweilige Förderfläche 210a, 210b, 210c, 210d, 210e, 210f und ein jeweiliger Elektromagnet 220a, 220b, 220c, 220d, 220e, 220f bilden zusammen ein jeweiliges Förderelement.

Die Förderflächen 210a, 210b, 210c, 210d, 210e, 210f sind entlang eines ersten Bands 240 und eines zweiten Bands 245 angeordnet. Die beiden Bänder 240, 245 definieren dabei die Position der jeweiligen Förderfläche 210a, 210b, 210c, 210d, 210e, 210f und sorgen dafür, dass eine jeweilige Förderfläche 210a, 210b, 210c, 210d, 210e, 210f horizontal ausgerichtet ist und bleibt. Das erste Band 240 läuft über ein erstes oberes Rad 230 um. Das zweite Band 245 läuft über ein zweites oberes Rad 235 um. Die Bänder 240, 245 laufen auch über entsprechende erste und zweite untere Räder um, welche jedoch in Fig. 1 nicht zu sehen sind. Die Bänder 240, 245 bilden zusammen mit den Rädern 230, 235 eine Umlaufeinrichtung.

Die Förderflächen 210a, 210b, 210c, 210d, 210e, 210f sind entlang der Bänder 240, 245 in gleichmäßigen Abständen angeordnet. Mittels der oberen Räder 230, 235, welche beide antreibbar sind, können die Förderflächen 210a, 210b, 210c, 210d, 210e, 210f umlaufend bewegt werden. Der Antrieb der oberen Räder 230, 235 ist durch die Steuerungseinrichtung 150 steuerbar, so dass die Steuerungseinrichtung 150 die Vertikalfördervorrichtung 200 zum Transport von Probenträgern 140 mit darin aufgenommenem Probenröhrchen 145 zwischen der unteren Transportfläche 110 und der oberen Transportfläche 110a verwenden kann.

In dem in Fig. 1 gezeigten Zustand sind die Transportflächen 210a, 210c, 210d und 210f jeweils derart angeordnet, dass sie eine ebene Erweiterung der unteren Transportfläche 110 bzw. der oberen Transportfläche 110a bilden. Dieser Zustand kann dazu verwendet werden, einen Probenträger 140 auf die jeweilige Transportfläche 210a, 210c, 210d, 210f zu bewegen. Anschließend kann die Transportvorrichtung 200 in Bewegung versetzt werden, so dass der Probenträger 140 zu der anderen der beiden Transportflächen 110, 110a transportiert wird. Dort kann er mittels der Elektromagnete 120, 120a, 220a, 220b, 220c, 220d, 220e, 220f auf die jeweilige Transportfläche 110, 110a bewegt werden.

Der Transport zwischen den Transportflächen 110, 110a verläuft dabei entlang eines ersten vertikalen Abschnitts 250 von der unteren Transportfläche 110 zur oberen Transportfläche 110a. Er verläuft des Weiteren entlang eines dazu parallelen zweiten vertikalen Abschnitts 255 von der oberen Transportfläche 110a zur unteren Transportfläche 110.

Die beschriebene Ausführung einer Vertikalfördervorrichtung 200 ermöglicht einen einfachen, zuverlässigen und platzsparenden bidirektionalen Transport von Probenträgern 140 mit darin aufgenommenem Probenröhrchen 145 zwischen der unteren Transportfläche 110 und der oberen Transportfläche 110a. Durch den möglichen nahezu kontinuierlichen Betrieb der Vertikalfördervorrichtung 200 ist ein hoher Durchsatz möglich.

Das Probenverteilungssystem 100 ist Bestandteil eines Laborautomatisierungssystems mit einer Anzahl von nicht näher dargestellten präanalytischen, analytischen und postanalytischen Stationen, die angrenzend an die Transportflächen 110 und/oder 110a angeordnet sind. Das Probenverteilungssystem 100 dient zum Transport der Probenbehälter zwischen diesen Stationen.

## Patentansprüche

1. Vertikalfördervorrichtung (200) zum Transport von in jeweiligen Probenträgern (140) aufgenommenen Probenbehältern (145) zwischen einem unteren Niveau und einem oberen Niveau eines Probenverteilungssystems (100),
- wobei ein jeweiliger Probenträger (140) mindestens ein magnetisch wirksames Element aufweist, das dazu ausgebildet ist, mit einem mittels mindestens eines elektromagnetischen Aktuators (120, 120a, 220a, 220b, 220c, 220d, 220e, 220f) erzeugten Magnetfeld derart wechselzuwirken, dass eine Antriebskraft auf den Probenträger (140) bewirkt wird,
- wobei die Vertikalfördervorrichtung (200) aufweist
- eine Anzahl von Förderelementen mit jeweiligen Förderflächen (210a, 210b, 210c, 210d, 210e, 210f) zur Aufnahme jeweils zumindest eines Probenträgers (140), und
- eine Umlaufeinrichtung, die dazu ausgebildet ist, im Betrieb die Förderelemente zwischen dem unteren Niveau und dem oberen Niveau derart umlaufend zu bewegen, dass die jeweiligen Förderflächen (210a, 210b, 210c, 210d, 210e, 210f) während der umlaufenden Bewegung durchgängig horizontal ausgerichtet bleiben,
**dadurch gekennzeichnet, dass** die Vertikalfördervorrichtung (200) aufweist:
- mindestens einen elektromagnetischen Aktuator (220a, 220b, 220c, 220d, 220e, 220f), der unterhalb einer Förderfläche (210a, 210b, 210c, 210d, 210e, 210f) angeordnet ist oder der unter eine Förderfläche (210a, 210b, 210c, 210d, 210e, 210f) schwenkbar ist und der dazu ausgebildet ist, einen Probenträger (140), der auf einer der Förderflächen (210a, 210b, 210c, 210d, 210e, 210f) anzutreiben ist, mit einer Antriebskraft zu beaufschlagen.

2. Vertikalfördervorrichtung (200) nach Anspruch 1, **dadurch gekennzeichnet, dass**
- unterhalb einer jeweiligen Förderfläche (210a, 210b, 210c, 210d, 210e, 210f) ein dem Förderelement zugeordneter elektromagnetischer Aktuator (220a, 220b, 220c, 220d, 220e, 220f) angeordnet ist.

3. Vertikalfördervorrichtung (200) nach Anspruch 1 oder 2, **dadurch gekennzeichnet, dass**
- die Umlaufeinrichtung im Betrieb die Förderelemente entlang eines von allen Förderelementen beschriebenen Umlaufwegs bewegt.

4. Vertikalfördervorrichtung (200) nach Anspruch 3, **dadurch gekennzeichnet, dass**
- die Förderelemente entlang des Umlaufwegs in gleichmäßigen Abständen zueinander angeordnet sind.

5. Vertikalfördervorrichtung (200) nach Anspruch 3 oder 4, **dadurch gekennzeichnet, dass**
- der Umlaufweg einen ersten vertikalen Abschnitt (250) und einen dazu parallelen zweiten vertikalen Abschnitt (255) aufweist, die jeweils zwischen dem unteren Niveau und dem oberen Niveau verlaufen, wobei die Umlaufeinrichtung im Betrieb die Förderelemente entlang des ersten vertikalen Abschnitts (250) von dem unteren Niveau zu dem oberen Niveau bewegt und die Förderelemente entlang des zweiten vertikalen Abschnitts (255) von dem oberen Niveau zu dem unteren Niveau bewegt.

6. Vertikalfördervorrichtung (200) nach einem der vorhergehenden Ansprüche, **dadurch gekennzeichnet, dass**
- jedes Förderelement eine Erkennungsvorrichtung für einen auf der Förderfläche (210a, 210b, 210c, 210d, 210e, 210f) des jeweiligen Förderelements befindlichen Probenträger (140) aufweist.

7. Probenverteilungssystem (100), aufweisend:
- eine Anzahl von Probenträgern (140) zur Aufnahme eines oder mehrerer Probenbehälter (145), wobei ein jeweiliger Probenträger (140) mindestens ein magnetisch wirksames Element aufweist, das dazu ausgebildet ist, mit einem mittels mindestens eines elektromagnetischen Aktuators (120, 120a, 220a, 220b, 220c, 220d, 220e, 220f) erzeugten Magnetfeld derart wechselzuwirken, dass eine Antriebskraft auf den Probenträger (140) bewirkt wird,
- eine untere Transportfläche (110) und eine dazu vertikal höher angeordnete obere Transportfläche (110a), die jeweils dazu ausgebildet sind, die Probenträger (140) zu tragen,
- eine Anzahl von ersten elektromagnetischen Aktuatoren (120), die stationär unter der unteren Transportfläche (110) angeordnet sind, wobei die ersten elektromagnetischen Aktuatoren (120) dazu ausgebildet sind, einen Probenträger (140), der auf der unteren Transportfläche (110) angeordnet ist, durch Ausüben einer magnetischen Kraft auf den Probenträger (140) zu bewegen, und
- eine Anzahl von zweiten elektromagnetischen Aktuatoren (120a), die stationär unter der oberen Transportfläche (110a) angeordnet sind, wobei die zweiten elektromagnetischen Aktuatoren (110a) dazu ausgebildet sind, einen Probenträger (140), der auf der oberen Transportfläche (110a) angeordnet ist, durch Ausüben einer magnetischen Kraft auf den Probenträger (140) zu bewegen,
- eine Vertikalfördervorrichtung (200) nach einem der vorhergehenden Ansprüche, wobei die untere Transportfläche (110) dem unteren Niveau entspricht und die obere Transportfläche (110a) dem oberen Niveau entspricht, sowie
- eine Steuerungseinrichtung (150), die dazu ausgebildet ist,
- die unter den Transportflächen (110, 110a) angeordneten elektromagnetischen Aktuatoren (120, 120a) derart anzusteuern, dass sich ein jeweiliger Probenträger (140) auf den Transportflächen (110, 110a) entlang einer vorgebbaren Bewegungsbahn bewegt,
- den mindestens einen elektromagnetischen Aktuator (220a, 220b, 220c, 220d, 220e, 220f), der dazu ausgebildet ist, einen Probenträger (140), der auf einer der Förderflächen (210a, 210b, 210c, 210d, 210e, 210f) anzutreiben ist, mit einer Antriebskraft zu beaufschlagen, derart anzusteuern, dass der Probenträger (140) von der Transportfläche (110, 110a) in Richtung einer der Förderflächen (210a, 210b, 210c, 210d, 210e, 210f) oder von einer der Förderflächen (210a, 210b, 210c, 210d, 210e, 210f) in Richtung der Transportfläche (110, 110a) bewegt wird, und
- das Umlaufsystem derart zu steuern, dass der Probenträger (140) zwischen dem unteren Niveau und dem oberen Niveau transportiert wird.

8. Laborautomatisierungssystem, aufweisend:
- eine Anzahl von präanalytischen, analytischen und/oder postanalytischen Stationen, die dazu ausgebildet sind, Probenbehälter und/oder Proben, die in jeweiligen Probenbehältern enthalten sind, zu bearbeiten, und
- ein Probenverteilungssystem (100) zum Transportieren der Probenbehälter zwischen den präanalytischen, analytischen und/oder postanalytischen Stationen nach Anspruch 7.

## Claims

1. Vertical conveying device (200) for transportation of sample containers (145) being received in respective sample carriers (140) between a bottom level and a top level of a sample distribution system (100),
- wherein a respective sample carrier (140) comprises at least one magnetically active element, which is adapted to interact with a magnetic field, which is generated by means of at least one electromagnetic actuator (120, 120a, 220a, 220b, 220c, 220d, 220e, 220f), such that a driving force is applied to the sample carrier (140),
- wherein the vertical conveying device (200) comprises
- a number of conveying elements having respective conveying surfaces (210a, 210b, 210c, 210d, 210e, 210f) for respectively receiving at least one sample carrier (140), and
- a circulating device, which is adapted, in operation, to circulate the conveying elements between the bottom level and the top level such that the respective conveying surfaces (210a, 210b, 210c, 210d, 210e, 210f) continuously remain aligned horizontally during the circulating movement,
**characterized in that** the vertical conveying device (200) comprises:
- at least one electromagnetic actuator (220a, 220b, 220c, 220d, 220e, 220f), which is arranged below a conveying surface (210a, 210b, 210c, 210d, 210e, 210f) or is pivotable below a conveying surface (210a, 210b, 210c, 210d, 210e, 210f), and which is adapted to apply a driving force to a sample carrier (140), which is to be driven on one of the conveying surfaces (210a, 210b, 210c, 210d, 210e, 210f).

2. Vertical conveying device (200) according to claim 1, **characterized in that**
- an electromagnetic actuator (220a, 220b, 220c, 220d, 220e, 220f), which is assigned to the conveying element, is arranged below a respective conveying surface (210a, 210b, 210c, 210d, 210e, 210f).

3. Vertical conveying device (200) according to claim 1 or 2, **characterized in that**
- the circulating device in operation circulates the conveying elements along a circulating path which is described by all the conveying elements.

4. Vertical conveying device (200) according to claim 3, **characterized in that**
- the conveying elements are arranged spaced apart from one another at regular distances along the circulating path.

5. Vertical conveying device (200) according to claim 3 or 4, **characterized in that**
- the circulating path comprises a first vertical portion (250) and a second vertical portion (255) which is parallel to the first one, said portions extending between the bottom level and the top level, wherein, in operation, the circulating device moves the conveying elements along the first vertical portion (250) from the bottom level to the top level and moves the conveying elements along the second vertical portion (255) from the top level to the bottom level.

6. Vertical conveying device (200) according to any of the preceding claims, **characterized in that**
- each conveying element comprises a detection device for a sample carrier (140) which is situated on the conveying surface (210a, 210b, 210c, 210d, 210e, 210f) of the respective conveying element.

7. Sample distribution system (100), comprising:
- a number of sample carriers (140) for receiving one or more sample containers (145), wherein a respective sample carrier (140) comprises at least one magnetically active element, which is adapted to interact with a magnetic field, which is generated by means of at least one electromagnetic actuator (120, 120a, 220a, 220b, 220c, 220d, 220e, 220f), such that a driving force is applied to the sample carrier (140),
- a bottom transport surface (110) and a top transport surface (110a), which is arranged vertically higher in relation to the bottom transport surface (110), said transport surfaces being adapted to carry the sample carriers (140),
- a number of first electromagnetic actuators (120), which are arranged in a stationary manner under the bottom transport surface (110), wherein the first electromagnetic actuators (120) are adapted to move a sample carrier (140), which is arranged on the bottom transport surface (110), by applying a magnetic force to the sample carrier (140), and
- a number of second electromagnetic actuators (120a), which are arranged in a stationary manner under the top transport surface (110a), wherein the second electromagnetic actuators (120a) are adapted to move a sample carrier (140), which is arranged on the top transport surface (110a), by applying a magnetic force to the sample carrier (140),
- a vertical conveying device (200) according to any of the preceding claims, wherein the bottom transport surface (110) corresponds to the bottom level and the top transport surface (110a) corresponds to the top level, and
- a control device (150), which is adapted to
- actuate the electromagnetic actuators (120, 120a), which are arranged under the transport surfaces (110, 110a), such that a respective sample carrier (140) is moved along a definable movement path on the transport surfaces (110, 110a),
- actuate the at least one electromagnetic actuator (220a, 220b, 220c, 220d, 220e, 220f), which is adapted to apply a driving force to a sample carrier (140), which is to be driven on one of the conveying surfaces (210a, 210b, 210c, 210d, 210e, 210f), such that the sample carrier (140) is moved from the transport surface (110, 110a) in the direction of one of the conveying surfaces (210a, 210b, 210c, 210d, 210e, 210f) or from one of the conveying surfaces (210a, 210b, 210c, 210d, 210e, 210f) in the direction of the transport surface (110, 110a), and
- controlling the circulating system such that the sample carrier (140) is transported between the bottom level and the top level.

8. Laboratory automation system, comprising:
- a number of pre-analytical, analytical and/or post-analytical stations, which are adapted to process sample containers and/or samples, which are contained in respective sample containers, and
- a sample distribution system (100) for transporting the sample containers between the pre-analytical, analytical and/or post-analytical stations according to claim 7.

## Revendications

1. Dispositif de transport vertical (200) pour le transport de récipients pour échantillons (145) reçus dans des supports d'échantillons respectifs (140) entre un niveau inférieur et un niveau supérieur d'un système de distribution d'échantillons (100),
- un support d'échantillon respectif (140) présentant au moins un élément à action magnétique qui est réalisé de manière à interagir avec un champ magnétique généré au moyen d'au moins un actionneur électromagnétique (120, 120a, 220a, 220b, 220c, 220d, 220e, 220f) de telle sorte qu'une force d'entraînement soit appliquée au support d'échantillon (140),
- le dispositif de transport vertical (200) présentant :
- une pluralité d'éléments de transport ayant chacun des surfaces de transport (210a, 210b, 210c, 210d, 210e, 210f) pour recevoir à chaque fois au moins un support d'échantillon (140) et
- un dispositif d'entraînement en circulation qui est réalisé, pendant le fonctionnement, pour faire circuler les éléments de transport entre le niveau inférieur et le niveau supérieur de telle sorte que les surfaces de transport respectives (210a, 210b, 210c, 210d, 210e, 210f) restent orientées constamment horizontalement pendant le mouvement de circulation,
**caractérisé en ce que** le dispositif de transport vertical (200) présente :
- au moins un actionneur électromagnétique (220a, 220b, 220c, 220d, 220e, 220f) qui est disposé en dessous d'une surface de transport (210a, 210b, 210c, 210d, 210e, 210f) ou qui peut être pivoté en dessous d'une surface de transport (210a, 210b, 210c, 210d, 210e, 210f) et qui est réalisé de manière à solliciter avec une force d'entraînement un support d'échantillon (140) qui doit être entraîné sur l'une des surfaces de transport (210a, 210b, 210c, 210d, 210e, 210f) .

2. Dispositif de transport vertical (200) selon la revendication 1, **caractérisé en ce**
- **qu'**un actionneur électromagnétique (220a, 220b, 220c, 220d, 220e, 220f) associé à l'élément de transport est disposé en dessous d'une surface de transport respective (210a, 210b, 210c, 210d, 210e, 210f).

3. Dispositif de transport vertical (200) selon la revendication 1 ou 2, **caractérisé en ce que**
- le dispositif d'entraînement en circulation déplace, pendant le fonctionnement, les éléments de transport le long d'une voie de circulation décrite par tous les éléments de transport.

4. Dispositif de transport vertical (200) selon la revendication 3, **caractérisé en ce que**
- les éléments de transport sont disposés de manière équidistante les uns des autres le long de la voie de circulation.

5. Dispositif de transport vertical (200) selon la revendication 3 ou 4, **caractérisé en ce que**
- la voie de circulation présente une première section verticale (250) et une deuxième section verticale (255) parallèle à celle-ci, lesquelles s'étendent à chaque fois entre le niveau inférieur et le niveau supérieur, le dispositif d'entraînement en circulation, pendant le fonctionnement, déplaçant les éléments de transport le long de la première section verticale (250) depuis le niveau inférieur jusqu'au niveau supérieur et déplaçant les éléments de transport le long de la deuxième section verticale (255) depuis le niveau supérieur jusqu'au niveau inférieur.

6. Dispositif de transport vertical (200) selon l'une quelconque des revendications précédentes, **caractérisé en ce que**
- chaque élément de transport présente un dispositif de détection pour un support d'échantillon (140) se trouvant sur la surface de transport (210a, 210b, 210c, 210d, 210e, 210f) de l'élément de transport respectif.

7. Système de distribution d'échantillons (100), présentant :
- une pluralité de supports d'échantillons (140) pour recevoir un ou plusieurs récipients pour échantillons (145), un support d'échantillon respectif (140) présentant au moins un élément à action magnétique, qui est réalisé de manière à interagir avec un champ magnétique généré au moyen d'au moins un actionneur électromagnétique (120, 120a, 220a, 220b, 220c, 220d, 220e, 220f) de telle sorte qu'une force d'entraînement soit appliquée au support d'échantillon (140),
- une surface de transport inférieure (110) et une surface de transport supérieure (110a) disposée verticalement plus haut que celle-ci, lesquelles sont réalisées à chaque fois de manière à porter les supports d'échantillons (140),
- une pluralité de premiers actionneurs électromagnétiques (120) qui sont disposés de manière stationnaire sous la surface de transport inférieure (110), les premiers actionneurs électromagnétiques (120) étant réalisés de manière à déplacer un support d'échantillon (140) qui est disposé sur la surface de transport inférieure (110) en exerçant une force magnétique sur le support d'échantillon (140), et
- une pluralité de deuxièmes actionneurs électromagnétiques (120a), qui sont disposés de manière stationnaire sous la surface de transport supérieure (110a), les deuxièmes actionneurs électromagnétiques (110a) étant réalisés de manière à déplacer un support d'échantillon (140) qui est disposé sur la surface de transport supérieure (110a) en exerçant une force magnétique sur le support d'échantillon (140),
- un dispositif de transport vertical (200) selon l'une quelconque des revendications précédentes, la surface de transport inférieure (110) correspondant au niveau inférieur et la surface de transport supérieure (110a) correspondant au niveau supérieur, et
- un dispositif de commande (150) qui est réalisé de manière à :
- commander les actionneurs électromagnétiques (120, 120a) disposés sous les surfaces de transport (110, 110a) de telle sorte qu'un support d'échantillon respectif (140) se déplace sur les surfaces de transport (110, 110a) le long d'une trajectoire de déplacement prédéfinissable,
- commander l'au moins un actionneur électromagnétique (220a, 220b, 220c, 220d, 220e, 220f) qui est réalisé de manière à solliciter avec une force d'entraînement un support d'échantillons (140) qui doit être entraîné sur l'une des surfaces de transport (210a, 210b, 210c, 210d, 210e, 210f) de telle sorte que le support d'échantillon (140) soit déplacé depuis la surface de transport (110, 110a) dans la direction de l'une des surfaces de transport (210a, 210b, 210c, 210d, 210e, 210f) ou depuis l'une des surfaces de transport (210a, 210b, 210c, 210d, 210e, 210f) dans la direction de la surface de transport (110, 110a), et
- commander le système de circulation de telle sorte que le support d'échantillon (140) soit transporté entre le niveau inférieur et le niveau supérieur.

8. Système d'automatisation de laboratoire, présentant :
- une pluralité de postes pré-analytiques, analytiques et/ou post-analytiques qui sont réalisés de manière à traiter des récipients pour échantillons et/ou des échantillons qui sont contenus dans des récipients pour échantillons respectifs, et
- un système de distribution d'échantillons (100) selon la revendication 7 pour transporter les récipients pour échantillons entre les postes pré-analytiques, analytiques et/ou post-analytiques.
